# EUROPÄISCHE PATENTANMELDUNG

(11) **EP 1 235 166 A1**
(43) Veröffentlichungstag der Anmeldung: **28.08.2002**
(21) Anmeldenummer: 01104217.3
(22) Anmeldetag: 22.02.2001
(51) Int. Cl.: G06F 17/60

(54) **Rechnergestütztes Güterverteilungssystem**

(71) Anmelder: Ford Global Technologies, Inc., A subsidiary of Ford Motor Company, Dearborn, Michigan 48126 (US)
(72) Erfinder: Schmitz-Ryan, Stephan, Dr., 50672 Köln (DE)
(74) Vertreter: Drömer, Hans-Carsten, Dr.-Ing.

(57) **Zusammenfassung**

Die Erfindung betrifft ein rechnergestütztes Güterverteilungssystem, wobei das Transportfahrzeug einen Rechner mit Speicher für die Verwaltung des Transportgutes aufweist, und dieser Rechner über eine im Transportfahrzeug befindlichen Funkeinrichtung mit externen Kommunikationsnetzen verbunden ist. Sie ist dadurch gekennzeichnet, daß das Transportgut mit mindestens einem Transponder ausgerüstet ist, der mit dem Rechner des Transportfahrzeuges in Verbindung steht. Dies ermöglicht unabhängig vom Zustand und von der augenblicklichen Position des Transportfahrzeuges berechtigten Dritten den direkten Zugriff zum Lesen und Beschreiben der Transponder.

## Beschreibung

Die Erfindung bezieht sich auf ein rechnergestütztes Güterverteilungssystem der im Oberbegriff des Patentanspruchs 1 erläuterten Art.

Aus der DE 19628801 ist ein rechnergestütztes Güterabfertigungssystem gemäß dem Oberbegriff des Patentanspruches 1 bekannt. Die für die Abfertigung erforderlichen Daten der von einem Transportfahrzeug zu transportierenden Güter werden vor dem Transport in den Speicher eines im oder am Transportfahrzeug befindlichen Rechners eingegeben, der mit einem im oder am Transportfahrzeug befindlichen Transponder verbunden ist. Entlang des vorgesehenen Transportweges sind Lese/Schreibgeräte stationiert, die bei der Vorbeifahrt des Transportfahrzeuges per Funk mit dem Transponder in Verbindung treten und mit diesem Daten austauschen und abhängig vom Ergebnis die Weiterfahrt des Transportfahrzeuges steuern. Am Zielort werden die im Speicher enthaltenen Daten der Güter ausgelesen und weiterverarbeitet.

Bei diesem Konzept ist vor der Fahrt immer eine zusätzliche Dateneingabe über das zu transportierende Gut erforderlich. Änderungen in der Beladung, d. h. eine teilweise Entladung des Gutes, kann vom Rechner nur erfaßt werden, wenn entsprechende manuelle Eingaben erfolgen.

Aus der EP 0994041 ist eine Transportvorrichtung aus Kunststoff mit Erkennungsmittel bekannt, bei der die Verpackung einzelner Transporteinheiten - Behälter oder Paletten - der zu transportierenden Güter einen Transponder aufweist.
Mittels dieses fest oder frei programmierbaren Transponders kann eine Transporteinheit ohne direkten Kontakt von einer entsprechenden Sende/Empfängereinheit erfaßt und angesprochen werden.

Aufgabe der vorliegenden Erfindung ist es, ein rechnergestütztes Güterabfertigungssystem dahingehend zu verbessern, daß einzelne Transporteinheiten in einem Transportfahrzeug selbstständig erfaßt und angesprochen werden können.

Gelöst wird diese Aufgabe mit den Merkmalen des Patentanspruches 1. Weitere vorteilhafte Ausgestaltungen der Erfindung sind in den Unteransprüchen aufgeführt.

Indem das Transportgut mit mindestens einem Transponder ausgerüstet ist, der mit dem Rechner des Transportfahrzeuges in Verbindung steht, kann über den Rechner des Transportfahrzeuges jederzeit der Transponder angesprochen werden und die aktuellen Daten im Rechner abgespeichert werden. Damit ist die laufende Bestandskontrolle des noch im Fahrzeug befindlichen Transportgutes möglich.

Vorteilhafterweise weist jede einzelne Transporteinheit des Transportgutes einen Transponder auf. Damit lassen sich für jede Transporteinheit die erforderlichen, individuellen Daten abspeichern. Dies ist sinnvoll, wenn im Transportfahrzeug Güter für verschiedene Empfänger und/oder mit unterschiedlichen Inhalten transportiert werden. Zumindest sollte der für einen Empfänger bestimmte Teil des Transportgutes einen Transponder aufweisen. Damit läßt sich im Transportfahrzeug die notwendige Fahrtroute nach Bedarf zu den verschiedenen Empfängern auch kurzfristig, sogar noch während der Auslieferungsfahrt, ändern und z. B. an die Verkehrssituation oder an den dringlichen Bedarf eines Empfängers anpassen.

Eine weitere vorteilhafte Ausgestaltung sieht vor, daß die Daten des Transportgutes im Transponder gespeichert sind, d. h. nicht nur Versender- und Empfängerdaten. Der Menge der im Transponder gespeicherten Daten sind dabei keine Grenzen gesetzt. Vorzugsweise sind dies Daten, die für den gesamten Transportvorgang benötigt werden, wie Versender- und Empfängeradressen, Inhalt, Hersteller, Gewichte, Preise, Wichtigkeiten, Frachtraten, Liefertermine, Zollerklärungen, Herstellungs-, Verpackungs- und Versendedatum, Gefahrenklassen usw..

Eine weitere vorteilhafte Ausgestaltung der Erfindung sieht vor, daß die Information über das Transportgut im Transponder über den mit dem Transponder in Verbindung stehenden Rechner des Fahrzeuges ein- und/oder ausgelesen werden können. Neben der bereits erwähnten Erfassung des Bestandes an Transportgut können damit auch einzelne oder alle im Transportfahrzeug befindlichen Transponder umgeschrieben werden, wenn sich z. B. Liefertermine verschieben oder bestimmte Lieferadressen nicht erreichbar sind.

Vorteilhafterweise können dabei auch berechtigte Dritte mittels Funkverbindung über den Rechner des Fahrzeuges in direkten Kontakt mit den Transpondem des Transportgutes treten. Dadurch können sich sowohl Versender als auch Empfänger des Transportgutes einen direkten Überblick über den Stand des Transportvorganges ein Bild machen. Erforderlichenfalls können auch Versender und/oder Empfänger die Daten des Transponders ändern, wenn sich z. B. eine Liefertermin, eine Lieferadresse, eine Lieferwichtigkeit ändert oder aber ein Rückruf zum Versender notwendig ist.

Bevorzugt werden in einer externen Stelle die aktuellen Daten des Transportfahrzeuges und des Transportgutes laufend über die Funkverbindung abgefragt und berechtigten Dritten zur Verfügung gestellt. Eine solche externe Stelle kann der Transporteur, der Versender, der Empfänger oder aber ein dritter Anbieter sein. Dort wird der entsprechende Transport und noch viele weitere Transporte koordiniert. Vorteil hier ist, daß an einer Stelle ein Gesamtüberblick über die im Transport befindlichen Transportgüter vorliegt.

In einer weiteren Ausführung erfolgt mittels einer Auswertung der Transpondersignale des Transportgutes eine Ortsbestimmung des Transportgutes im Innenraum und der Umgebung des Transportfahrzeuges. Dies ist hilfreich beim Be- und Entladen, um z. B. für eine zügige Abfertigung eine bestimmte Be- oder Entladereihenfolge der einzelnen Transporteinheiten vorzugeben. Zudem erkennt das System, ob sich das Transportgut schon oder noch im Transportfahrzeug befindet.

Vorteilhafterweise wird auf dem Rechner des Transportfahrzeuges die Informationen über den Ort des Transportgutes relativ zum Transportfahrzeug zur Verfügung gestellt. Damit wird vor allem für den Fahrer das Auffinden einzelner Transporteinheiten im Innenraum und um das Transportfahrzeug herum erleichtert.

Ein weiterer Aspekt der Erfindung behandelt eine Transportfahrzeug für das erfindungsgemäße rechnergestützte Güterverteilungssystem, wobei das Transportfahrzeug einen Rechner mit Speicher für die Verwaltung des Transportgutes aufweist, und dieser Rechner über eine im Transportfahrzeug befindlichen Funkeinrichtung mit externen Kommunikationsnetzen verbunden ist. Dabei ist der Innenraum und die Umgebung des Transportfahrzeuges mittels Sende- und Empfangseinrichtungen, die mit dem Rechner des Transportfahrzeuges verbunden sind, ganz oder teilweise als Transponderraum ausgebildet.

Vorteilhaft weisen die Sende/Empfangseinrichtungen Mittel zur Auswertung der Transpondersignale des Transportgutes für eine Ortsbestimmung des Transportgutes im Innenraum des Transportfahrzeuges auf. Durch entsprechende Anordnung von Sende- und Empfangsantennen im und am Transportfahrzeug lassen sich so genaue Ortsbestimmungen vornehmen.

Eine weitere vorteilhafte Ausführung der Erfindung sieht vor, daß die Sende- und Empfangseinrichtungen im Fahrzeug mit einem schlüssellosen Fahrzeugzugangssteuersystem gekoppelt sind. Ein derartiges Steuersystem ist z. B. in der DE 198 25 821 beschrieben. Mittels einer modifizierten Programmierung des Fahrzeugsrechners läßt sich auch diese Zugangssteuerung mit dem vorgeschriebenen System realisieren. Dabei ist es gleichgültig, ob ein vorhandenes Fahrzeugzugangssteuersystem um die Eigenschaften des vorgestellten Güterverteilungssystems erweitert wird oder ob das im Fahrzeug vorhandene rechnergestützte Güterverteilungssystem um die Funktion des Fahrzeugzugangssteuersystems erweitert wird.

Weitere vorteilhafte Einsatzarten der Erfindung werden im Folgenden vorgestellt.

Die Transponder am Transportgut im Transportfahrzeug sind sowohl dem Empfänger als auch dem Versender des Transportgutes über Funkverbindung, vorzugsweise über das normale Telefonnetz, zugänglich. Ein Netzwerkbetreiber stellt den Zugang zum Transportfahrzeug über drahtlose Kommunikation her. Das Transportfahrzeug weist Anschlüsse für die mobile Kommunikation auf, wodurch der Zugang für Dritte, das sind z. B. Versender und Empfänger ermöglicht wird.

Das Transportgut besteht aus einzelnen Paketen, die jeweils mit eigenen Transpondern ausgerüstet sind. Die Transponder können somit ausgelesen und auch beschrieben werden, d.h. es ist eine bidirektionale Kommunikation zwischen Versender bzw. Empfänger des Paketes mit dem Paket möglich.

Der Fahrer des Transportfahrzeuges kann über den fahrzeugeigenen Rechner immer die aktuellen Eigenschaften der Pakete einsehen. Dies betrifft u. a. Liefertermine, bevorzugte Auslieferungen, Umdisponierungen, Fahrtroutenoptimierung in Verbindung mit einem Verkehrsleitsystem. Z. B. kann bei Umdisponierungen der Fahrer kurzfristig angewiesen werden, ein bestimmtes Paket an einem anderen Auslieferungsort zu einem anderen Zeitpunkt auszuliefern.

Der Versender des Paketes erhält eine Paketnummer, die ihn berechtigt, die Daten seines Paketes anzusehen. Mit dieser Paketnummer und/oder einer verschlüsselten Transportkennzahl kann der Versender direkt, z. B. über das Internet, eine Umprogrammierung seines Paketes vornehmen.

Eine Amplitudenauswertung der Transpondersignale ermöglicht eine Ortsbestimmung in Innenraum des Transportfahrzeuges. Dem Fahrer können so Informationen über den genauen Ort des Paketes im Fahrzeug zur Verfügung gestellt werden, so daß eine umständliche Suche nach dem Paket im Fahrzeug entfällt.

Weiterhin kann das Fahrzeug mit einem öffentlichen Registrierungscode versehen sein. Der berechtigte Empfänger des Paktes erhält dann für das Transportfahrzeug, in dem sich ein für Ihn bestimmtes Paket befindet, eine Zugangsberechtigung, was durch ein geeignetes Sicherheitsverfahrens sichergestellt wird. Dabei können auch andere Berechtigte, z. B. Kurierdienste, mit dem Zugang beauftragt werden.

Über den im Fahrzeuginnenraum befindlichen Sende- und Empfangseinrichtungen ist eine kontinuierliche und bidirektionale Kommunikation zwischen den Transpondern der Pakete und dem Rechner des Transportfahrzeuges möglich. Die gesamten Informationen können vom Fahrer des Transportfahrzeuges abgerufen werden und z.B. auf der Anzeige des Rechners oder aber auf einem Handgerät angezeigt werden, wobei das Handgerät ebenfalls mit dem Rechner des Transportfahrzeuges in Verbindung steht. Der Fahrer erhält so auch die Möglichkeit, Daten in den Rechner einzugeben und z. B. Transponder des Transportgutes umzuprogrammieren.

Der Innenraum des Transportfahrzeuges ist ganz oder teilweise als Transponderraum ausgebildet, indem Antennen der Sende- und Empfangseinrichtung im Innenraum angeordnet sind. Eine Amplitudenauswertung ermöglicht die Zuordnung der einzelnen Pakete zu bestimmten Antennenbereichen, z. B. durch direkte Amplitudenauswertung, oder durch Ansteuerung einzelner Antennen. Damit wird eine Ortsbestimmung des Paketes im Fahrzeug ermöglicht. Vorzugsweise arbeiten die Transponder ohne Batterie, indem sie die Funkenergie der Sendeinrichtung ausnutzen.

## Patentansprüche

1. Rechnergestütztes Güterverteilungssystem, wobei das Transportfahrzeug einen Rechner mit Speicher für die Verwaltung des Transportgutes aufweist, und dieser Rechner über eine im Transportfahrzeug befindlichen Funkeinrichtung mit externen Kommunikationsnetzen verbunden ist,
**dadurch gekennzeichnet, daß**
das Transportgut mit mindestens einem Transponder ausgerüstet ist, der mit dem Rechner des Transportfahrzeuges in Verbindung steht.

2. Rechnergestütztes Güterverteilungssystem nach Anspruch 1,
**dadurch gekennzeichnet, daß**
jede einzelne Transporteinheit des Transportgutes einen Transponder aufweist.

3. Rechnergestütztes Güterverteilungssystem nach Anspruch 1,
**dadurch gekennzeichnet, daß**
der für einen Empfänger bestimmte Teil des Transportgutes einen Transponder aufweist.

4. Rechnergestütztes Güterverteilungssystem nach Anspruch 1,
**dadurch gekennzeichnet, daß**
die Information über das Transportgut im Transponder gespeichert sind.

5. Rechnergestütztes Güterverteilungssystem nach Anspruch 1,
**dadurch gekennzeichnet, daß**
die Information über das Transportgut im Transponder über den mit dem Transponder in Verbindung stehenden Rechner des Fahrzeuges ein- und/oder ausgelesen werden können.

6. Rechnergestütztes Güterverteilungssystem nach Anspruch 1,
**dadurch gekennzeichnet, daß**
berechtigte Dritte mittels Funkverbindung über den Rechner des Fahrzeuges in direkten Kontakt mit den Transpondern des Transportgutes treten.

7. Rechnergestütztes Güterverteilungssystem nach Anspruch 1,
**dadurch gekennzeichnet, daß**
in einer externen Stelle die aktuellen Daten des Transportfahrzeuges und des Transportgutes laufend über die Funkverbindung abgefragt und berechtigten Dritten zur Verfügung gestellt werden.

8. Rechnergestütztes Güterverteilungssystem nach Anspruch 1,
**dadurch gekennzeichnet, daß**
mittels einer Auswertung der Transpondersignale des Transportgutes eine Ortsbestimmung des Transportgutes im Innenraum und der Umgebung des Transportfahrzeuges erfolgt.

9. Rechnergestütztes Güterverteilungssystem nach Anspruch 8,
**dadurch gekennzeichnet, daß**
auf dem Rechner des Transportfahrzeuges die Informationen über den Ort des Transportgutes relativ zum Transportfahrzeug zur Verfügung gestellt wird.

10. Transportfahrzeug mit rechnergestütztem Güterverteilungssystem, wobei das Transportfahrzeug einen Rechner mit Speicher für die Verwaltung des Transportgutes aufweist, und dieser Rechner über eine im Transportfahrzeug befindlichen Funkeinrichtung mit externen Kommunikationsnetzen verbunden ist,
**dadurch gekennzeichnet, daß**
der Innenraum und die Umgebung des Transportfahrzeuges mittels Sendeund Empfangseinrichtungen, die mit dem Rechner des Transportfahrzeuges verbunden sind, ganz oder teilweise als Transponderraum ausgebildet ist.

11. Transportfahrzeug mit rechnergestütztem Güterverteilungssystem nach Anspruch 10,
**dadurch gekennzeichnet, daß**
die Sende/Empfangseinrichtungen Mittel zur Auswertung der Transpondersignale des Transportgutes für eine Ortsbestimmung des Transportgutes im Innenraum des Transportfahrzeuges aufweisen.

12. Transportfahrzeug mit rechnergestütztem Güterverteilungssystem nach Anspruch 10,
**dadurch gekennzeichnet, daß**
die Sende- und Empfangseinrichtungen im Fahrzeug mit einem schlüssellosen Fahrzeugzugangssteuersystem gekoppelt sind.
